# EUROPÄISCHE PATENTSCHRIFT

(11) **EP 2 095 941 B1**
(45) Veröffentlichungstag und Bekanntmachung des Hinweises auf die Patenterteilung: **16.09.2015**
(21) Anmeldenummer: 08003568.6
(22) Anmeldetag: 27.02.2008
(51) Int. Cl.: B32B 21/00

(54) **Belagplatte**
Fitting plate
Plaque de revêtement

(43) Veröffentlichungstag der Anmeldung: 02.09.2009
(73) Patentinhaber: Kronoplus Technical AG, 9052 Niederteufen (CH)
(72) Erfinder: Döhring, Dieter Dr., 01561 Zabeltitz (DE); Grütering, Ludwig, 46284 Dorsten (DE)
(74) Vertreter: Heselberger, Johannes

(56) Entgegenhaltungen:
- US-A- 3 677 868

## Beschreibung

### 1. Gebiet der Erfindung

Die vorliegende Erfindung betrifft eine Belagplatte auf Holzwerkstoffbasis, insbesondere für einen Fußboden-, Decken- oder Wandbelag, sowie ein Verfahren zur Herstellung einer Belagplatte.

### 2. Hintergrund

Aus dem Stand der Technik ist eine Vielzahl von Belagplatten auf Holzwerkstoff basis bekannt. Im einfachsten Fall besteht eine solche Belagplatte aus einer massiven Echtholzdiele. Belagplatten aus Massivholz sind jedoch sehr teuer und lassen sich nur von gut geschulten Fachleuten verlegen. Allerdings bieten derartige Echtholzdielen eine sehr attraktive Oberfläche. Um die hohen Kosten von Echtholzböden zu vermeiden und gleichzeitig die attraktive Oberfläche derartiger Böden zu ermöglichen, wurden Furnierbelagplatten entwickelt. Bei Furnier handelt es sich um dünne Blätter, in der Regel 0,3 bis 6 mm, aus einem hochwertigen Holz, die auf ein Trägermaterial aufgeleimt werden. Die Trägermaterialien bestehen in der Regel aus preiswerteren Holzwerkstoffen und sind deutlich dicker als die Furnierschicht. Bei einer Dicke von mehr als 2,5 mm werden derartige Beläge auch als Fertigparkett bezeichnet. Ein Nachteil derartiger Beläge liegt darin, dass die Echtholzschicht üblicherweise ein anderes Ausdehnungsverhalten bei Wärme und Feuchtigkeit zeigt, wie das darunterliegende Trägermaterial. Zu diesem Zweck wird z.B. bei Fertigparkett unterhalb der Echtholzschicht eine Anzahl von dünnen Holzstäbchen eingerichtet, die für einen Ausgleich des unterschiedlichen Ausdehnungsverhaltens sorgen sollen. Dies ist von der Herstelltechnik und von den Materialien her aufwendig und teuer. Versuche, die Mittelschicht aus Holzstäbchen durch Sperrholz zu ersetzen, führten zu Problemen hinsichtlich Verformungen und Fugenöffnungen.

Weiter sind aus dem Stand der Technik Laminatpaneele für Fußboden- oder Deckenbeläge bekannt. Im Vergleich zu den eingangs genannten Belagplatten sind Laminatpaneele relativ kostengünstig. Laminatpaneele bestehen im einfachsten Fall aus einer 4 bis 8 mm dicken Trägerplatte aus MDF- oder HDF-Werkstoff, auf dessen Oberseite ein mit einem Dekor bedrucktes Papier aufgeklebt wird. An der Unterseite der Trägerplatte ist ein so genanntes Gegenzugpapier eingerichtet, das einem Verzug der Trägerplatte durch die aufgebrachte Dekorschicht entgegenwirken soll. Auf die Dekorschicht wird üblicherweise eine abriebfeste Schicht bestehend aus kleinen Korundpartikeln, die in einer Harzmatrix eingebettet sind, aufgebracht. Die dekorative Oberschicht der Laminatpaneele besteht daher nicht aus echtem Holz, sondern sie besteht aus dem oben erwähnten bedruckten Spezialpapier. Die Probleme von Fertigparkett hinsichtlich des unterschiedlichen Ausdehnungsverhaltens von dekorativer Holzoberschicht und Trägermaterial werden somit vermieden, so dass als Trägermaterial bei Laminatpaneelen kostengünstigere Werkstoffe verwendet werden können.

Aus der US 3,677,868 ist ein Fertigparkett bekannt, bei dem eine dünne Echtholzschicht auf einer Anzahl von dünnen Holzstäbchen eingerichtet ist, die als Trägerschicht dienen. Zwischen der Echtholzschicht und der Trägerschicht aus dünnen Holzstäbchen ist eine stabilisierende Querband-Schicht aus einem harzgetränkten Kraftpapier vorgesehen, die eine Ausdehnung der Echtholz- und Trägerschicht verhindern soll. Das harzgetränkte Kraftpapier soll hierzu nach einer Vortrocknung zwischen Trägerschicht und Echtholzschicht angeordnet und danach gemeinsam mit den beiden Schichten heissverpresst werden. Hierbei polymerisiert das Harz und es kommt zu einer festen chemische Bindung zwischen der Querband-Schicht und Trägerschicht bzw. Echtholzschicht.

Aus der WO 2005/123380, A1 ist ein Laminatpaneel vorbekannt, umfassend eine MDF oder HDF Trägerschicht auf der eine Dekorschicht aus einem bedruckten und harzimprägnierten Papier angeordnet ist. Zum Schutz vor Feuchtigkeit ist auf die Unterseite der Trägerschicht zudem eine weitere Schutzschicht auflaminiert.

Ausgehend von diesem Stand der Technik stellt sich die Aufgabe, eine Belagplatte bereitzustellen, die die oben genannten Nachteile des Standes der Technik ausräumt bzw. vermindert. Insbesondere stellt sich die Aufgabe, eine Belagplatte bereitzustellen, bei der möglichst kostengünstige Materialien verwendet werden können und die dennoch eine äußerst attraktive und hochwertige Oberfläche aufweist. Es ist dabei insbesondere die Aufgabe der Erfindung eine Trägerplatte für eine Echtholzschicht bereitzustellen, die kostengünstiger und in der Herstellung weniger aufwendig ist, als die bisher üblichen Trägerwerkstoffe bzw. -systeme nach dem Stand der Technik.

Diese und andere Aufgaben, die beim Lesen der folgenden Beschreibung noch genannt werden oder vom Fachmann erkannt werden können, werden mit einer Belagplatte nach Anspruch 1 bzw. einem Verfahren nach Anspruch 15 gelöst.

### 3. Ausführliche Beschreibung der Erfindung

Die erfindungsgemäße Belagplatte ist insbesondere für einen Fußboden-, Decken- oder Wandbelag geeignet und umfasst zumindest eine Trägerplatte aus einem Holzwerkstoff mit einer Ober- und einer Unterseite. Die Unterseite der Trägerplatte ist weiter mit einer Barriereschicht aus einem ersten Material versehen, die die Trägerplatte vor Feuchtigkeit schützen soll. Weiter umfasst die Belagplatte eine Dekorschicht, die an der Oberseite der Trägerplatte angeordnet ist. Erfindungsgemäß ist auf der Oberseite der Trägerplatte eine Entkopplungsschicht aus einem zweiten Material aufgeklebt, die die Dekorschicht von der Trägerplatte derart entkoppelt, dass sich die Trägerplatte und die Dekorschicht unterschiedlich ausdehnen können. Das Merkmal, dass sich Trägerplatte und Dekorschicht unterschiedlich ausdehnen können bedeutet, dass sich beide Elemente ausdehnen können, ohne dass dies zu einem störenden Verzug der Belagplatte führt. Obwohl es bevorzugt ist, dass es zu keinerlei merkbaren Verzug der Belagplatte kommt, sollte es dem Fachmann klar sein, dass unter bestimmten Umständen ein leichter Verzug der Belagplatte tolerierbar ist, solange die Belagplatte zumindest für einen Fußboden-, Wand- oder Deckenbelag verwendbar ist. Die Entkopplungsschicht ist quasi elastisch und bewirkt, dass die auftretenden Unterschiede in dem Ausdehnungsverhalten von Dekorschicht und Trägerplatte zumindest weitgehend ausgeglichen werden. Die Dicke und das Material der Entkopplungsschicht können dabei der Differenz im Ausdehnungsverhalten angepasst werden. Allgemein sollte die Dicke der Entkopplungsschicht größer gewählt werden, je größer der Unterschied im Ausdehnungsverhalten von Trägerplatte und Dekorschicht ist. Bei einem geringen Unterschied im Ausdehnungsverhalten kann die Entkopplungsschicht dementsprechend dünner ausgeführt werden.

In einer bevorzugten Ausführungsform besteht die Trägerplatte aus einer OSB-Platte (Oriented Strant Board). OSB-Platten sind im Stand der Technik wohl bekannt und werden aus langen Holzspänen (so genannte "strants") mit vorbestimmter Form und Dicke hergestellt, die miteinander verleimt werden. Diese großen und häufig flachen Späne sind längs ausgerichtet, wodurch sich eine höhere Biegefestigkeit der OSB-Platte im Vergleich zu normalen Flachpressplatten, wie z. B. Spanplatten ergibt. Nachteilig an OSB-Platten ist jedoch, dass die feuchtebedingten Dimensionsänderungen sich von vielen Nutzholzarten unterscheiden, ebenso wie die Ausgleichsfeuchte. Aus diesem Grund wurden OSB-Platten bisher in der Regel nicht als Werkstoffe für Fußbodenbeläge verwendet. Die vorliegende Erfindung umfasst jedoch die überraschende Entdeckung, dass eine derartige OSB-Platte als Trägerplatte für einen Fußboden-, Decken- oder Wandbelag geeignet ist, wenn sie an ihrer Unterseite mit einer Barriereschicht gegenüber Feuchtigkeit geschützt wird. Die Barriereschicht erlaubt in Zusammenwirkung mit der Entkopplungsschicht, dass eine OSB-Platte als Trägerplatte für eine Dekorschicht verwendbar ist, insbesondere wenn die Dekorschicht eine Echtholzschicht ist, wie es im Folgenden beschrieben werden wird.

Erfindungsgemäß besteht die Dekorschicht aus einer Schicht aus Echtholz. Eine derartige Echtholzschicht kann eine übliche Dicke von 0,3 bis 6 mm haben, vorzugsweise 1 bis 6 mm. Als Holzart für die Herstellung der Echtholzschicht eignen sich fast alle Holzarten, jedoch werden insbesondere Holzarten mit ästhetisch ansprechender Maserung und Farbe bevorzugt, wie z. B. Eiche, Ahorn, Buche und Edelhölzer.

In einer vorteilhaften Ausführungsform sind das erste Material und das zweite Material unterschiedlich. Insbesondere sind die beiden unterschiedlichen Materialien so gewählt, dass sie für ihre unterschiedlichen Aufgaben optimale Eigenschaften haben. Das Material für die Barriereschicht ist somit ein Material, das besonders gut vor dem Eindringen von Feuchtigkeit in die Trägerplatte schützt. Das Material für die Entkopplungsschicht hat insbesondere die gewünschten elastischen Eigenschaften, um als Entkopplungsschicht wirksam dienen zu können. Bevorzugt ist das erste Material ein Phenolharz. Das zweite Material ist bevorzugt ein verleimungsfähiger Harzfilm. In einer besonders vorteilhaften Ausbildungsform ist das zweite Material, das als Entkopplungsschicht dient, auch dazu in der Lage, einen Feuchtigkeitsaustausch zwischen der Trägerplatte und der Dekorschicht zu verringern, bevorzugt zu verhindern. Auf diese Weise wird die Trägerplatte wirksam von Ober- und Unterseite vor Feuchtigkeit geschützt, was insbesondere bei Verwendung einer OSB-Platte von Vorteil ist. Das Auftragen der Harzfilme kann beispielsweise mittels Sprühlackierung, Rollenbeschichtung, Rakelbeschichtung, Siebdruckbeschichtung oder einer Kombination dieser Verfahren geschehen.

Die Harze für Barriereschicht und Entkopplungsschicht werden vorzugsweise auf ein Trägerpapier, wie z. B. ein Kraftpapier gebracht. Das Trägerpapier sollte mit den Harzen getränkt bzw. möglichst vollständig imprägniert sein. Anschließend wird das mit dem jeweiligen Harz getränkte Papier als Barriereschicht bzw. Entkopplungsschicht auf Ober- bzw. Unterseite der Trägerplatte aufgebracht. Danach werden die getränkten Papiere vorzugsweise unter Einwirkung von Hitze mit der Trägerplatte verpresst. Dabei geschieht vorzugsweise eine Polykondensation der verwendeten Harze.

Eine besonders vorteilhafte Ausführungsform ist wie folgt aufgebaut: Eine Trägerplatte, insbesondere eine OSB- oder HDF- Trägerplatte, wird in einer Presse beidseitig beschichtet. Als Beschichtungsmaterialien werden duromerharzgetränkte Papierimprägnate eingesetzt. Als Duromerharze können u.a. Harnstoff-, Melamin- und/ oder Phenolharze eingesetzt werden. Diese Imprägnate werden unter erhöhter Temperatur und Druck in bekannter Weise verpresst. Dabei haben oberes und unteres Imprägnat vorzugsweise einen unterschiedlichen Aufbau. Beispielsweise besteht das untere Imprägnat aus einem melaminharzgetränktem Papier, das der Trägerplatte u.a. eine aktive Gegenzugwirkung verleiht. Das obere Imprägnat ist hingegen ein phenolharzgetränktes Papier. Auf die obere Schicht wird ein Klebstoff, insbesondere ein elastischer Schmelzklebstoff aufgetragen. Auf diese Klebstoffschicht wird eine Echtholzschicht (0,3 - 6 mm) aufgelegt. In der Praxis kann das beispielsweise derart erfolgen, dass die mit Imprägnaten beschichtete Trägerplatte über einen Walzenauftrag vollflächig mit einem PUR-Schmelzklebstoff versehen wird und anschließend die Echtholzteile (die bereits zu einer Platte im erforderlichen Abmaß vorgefertigt sein können) aufgelegt und mittels Kalander, Doppelbandpresse oder Kurztaktpresse ausreichend zu einem Verbund zusammengefügt werden.

Auf diese Art entsteht ein Verbund mit einer entkoppelnden Schicht. Trägerplatten, wie beispielsweise OSB und HDF, haben bei Feuchteeinwirkung ein anderes Dehnverhalten als die Echtholzdeckschicht. Bei einem Klima von 40 °C und 75 % rel. Feuchte ändert sich eine OSB-Platte innerhalb 24 h nur geringfügig. Eine Buchedeckschicht zeigt hingegen eine deutlich messbare Dimensionsveränderung. Würde man OSB-Platte und Echtholzdeckschicht direkt und steif verleimen, käme es zu einer starken positiven Querwölbung des Paneels, was eine Unbrauchbarkeit als bsp. Bodenmaterial zur Folge hätte. Die entkoppelnde Schicht des oberen Imprägnates zusammen mit der elastischen Wirkung des Klebstoffes bewirken aber, dass OSB-Platte und Echtholz entkoppelt werden und je nach Luftfeuchte getrennt wachsen und schrumpfen können, ohne das es zu einem Verzug kommt. Der Verbund wird dabei jedoch im Gefüge nicht beschädigt und die Ausdehnungen/Schrumpfungen sind reversibel. Neben der beschriebenen Möglichkeit gibt es weitere, um zu einer derartigen Entkopplung zu kommen. Beispielsweise können auf die Trägerplatte beidseitig geeignete Lacke aufgetragen werden. Das Echtholz wird dann wie beschrieben gemeinsam mit einem Klebstoff, bevorzugt einem elastischen wasserfreien System, aufgelegt und verbunden.

In einer bevorzugten Ausführungsform ist die zumindest eine Trägerplatte mit Kopplungsmitteln versehen. Die Trägerplatte kann jede geeignete Form haben, wie z.B. die Form von schmalen Streifen. Die Kopplungsmittel dienen dazu, mehrere gleichartig ausgebildete Belagplatten in einer Ebene miteinander verbinden zu können, um so z.B. einen Fußbodenbelag zu bilden. Die Kopplungsmittel befinden sich bevorzugt an den Längsseiten und/oder Querseiten der Trägerplatte, und besonders bevorzugt an zumindest zwei gegenüber liegenden Seiten. Die Kopplungsmittel sollen ein Verbinden von mehreren entsprechend ausgebildeten Belagplatten ermöglichen, so dass die Herstellung eines Fußboden-, Decken- oder Wandbelags aus einer Mehrzahl geeignet ausgebildeter Belagplatten möglich ist. In einer besonders bevorzugten Ausführungsform bestehen die Kopplungsmittel aus Nut- und Federelementen. Die Nut- und Federelemente sind bevorzugt in die Seiten der Trägerplatte eingearbeitet, zum Beispiel gefräst, und bilden mit der Trägerplatte eine integrale Einheit.

In einer weiteren bevorzugten Ausführungsform ist unterhalb der Barriereschicht der Trägerplatte eine schallabsorbierende Schicht vorgesehen. Derartige schallabsorbierende Schichten sind dem Fachmann aus dem Gebiet der Laminat-, Furnier- und Parkettböden bekannt.

Ein weiterer Aspekt der Erfindung betrifft ein Verfahren zur Herstellung einer Belagplatte, insbesondere einer Belagplatte für einen Fußboden-, Decken- oder Wandbelag. Das Verfahren umfasst die folgenden Schritte: Bereitstellen einer Trägerplatte aus einem Holzwerkstoff mit einer Ober- und einer Unterseite, und Auftragen einer Barriereschicht aus einem ersten Material auf die Unterseite, um die Trägerplatte vor Feuchtigkeit zu schützen und Auftragen einer Entkopplungsschicht aus einem zweiten Material auf die Oberseite, und danach Aufkleben einer Dekorschicht auf die Entkopplungsschicht.

Die Verwendung einer Entkopplungsschicht ermöglicht die Bereitstellung einer Belagplatte, die eine Schicht aus Echtholz hat, aber bei der das Material der Trägerplatte weitgehend frei gewählt werden kann. Somit kann für die Trägerplatte beispielsweise ein kostengünstiges Material gewählt werden und/oder ein Material mit besonders vorteilhaften mechanischen Eigenschaften. Insbesondere kann die Trägerplatte aus OSB-Werkstoff hergestellt werden. Ein weiterer Vorteil der Erfindung liegt darin, dass eine Trägerplatte gewählt werden kann, die mit integrierten Kopplungsmitteln, wie z.B. Nut- und Federelementen versehen werden kann. Derartige Belagplatten mit integrierten Kopplungsmitteln waren bisher in der Regel nur von Laminatpaneelen bekannt und erlauben ein besonders einfaches Verlegen, dass auch von einem Laien ausgeführt werden kann. Die Erfindung ermöglicht daher eine vereinfachte Verlegung von Belagplatten mit Echtholzschichten und verbindet daher die Vorteile von Laminatpaneel, nämlich geringe Kosten und einfache Verlegung, mit den Vorteilen eines Fertigparketts, nämlich der hochwertigen und ästhetisch ansprechenden Echtholzoberfläche.

### 4. Beschreibung von bevorzugten Ausführungsformen

Im Folgenden wird nun eine detaillierte Beschreibung der Figuren gegeben.
Figur 1 zeigt eine schematische Ansicht einer Unterstruktur einer Fertigparkettplatte nach dem Stand der Technik;
Figur 1A zeigt die Unterstruktur nach Figur 1, wenn eine Echtholzschicht darauf angebracht ist;
Figur 2 zeigt eine schematische Ansicht einer erfindungsgemäßen Belagplatte; und
Figur 3 zeigt eine Ausführungsform einer erfindungsgemäßen Belagplatte im Schnitt.

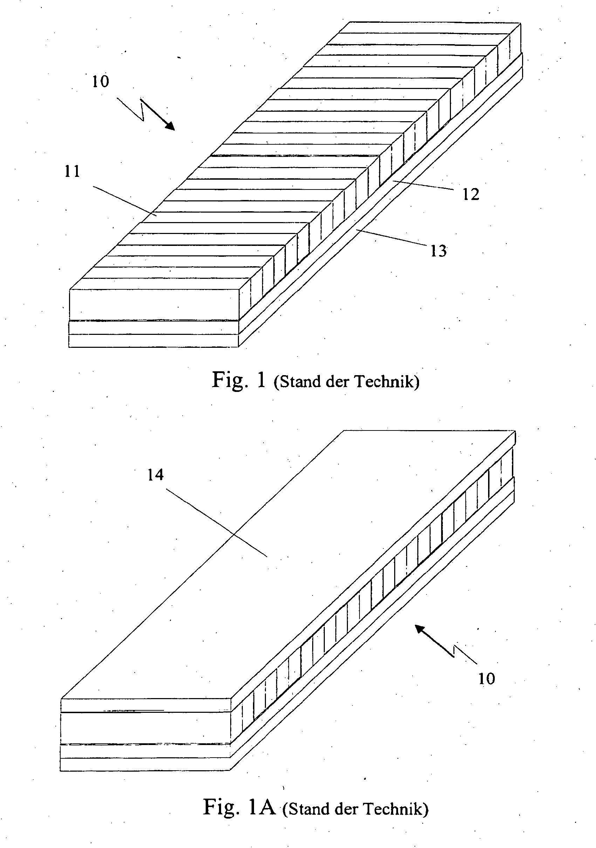

Zum besseren Verständnis der Erfindung wird im Folgenden anhand der Figuren 1 und 1A eine kurze Beschreibung des Aufbaus eines Fertigparketts aus dem Stand der Technik gegeben. Mit dem Bezugszeichen 10 ist die Träger- oder Unterstruktur eines Fertigparketts bezeichnet. Die Unterstruktur 10 umfasst eine Basisplatte 12 auf der eine Anzahl von längs angeordneten Holzstäbchen 11 angeordnet ist. Unterhalb der Basisplatte 12 befindet sich eine Schallabsorptionsschicht 13. Die Holzstäbchen 11 dienen dazu, das unterschiedliche Ausdehnungsverhalten von Unterstruktur 10 und einer darauf angebrachten Echtholzschicht 14 (siehe Figur 1A) möglichst auszugleichen. In Figur 1A ist eine komplette Fertigparkettplatte dargestellt, die aus der oben beschriebenen Unterstruktur 10 besteht, auf der eine Echtholzschicht 14 befestigt ist.

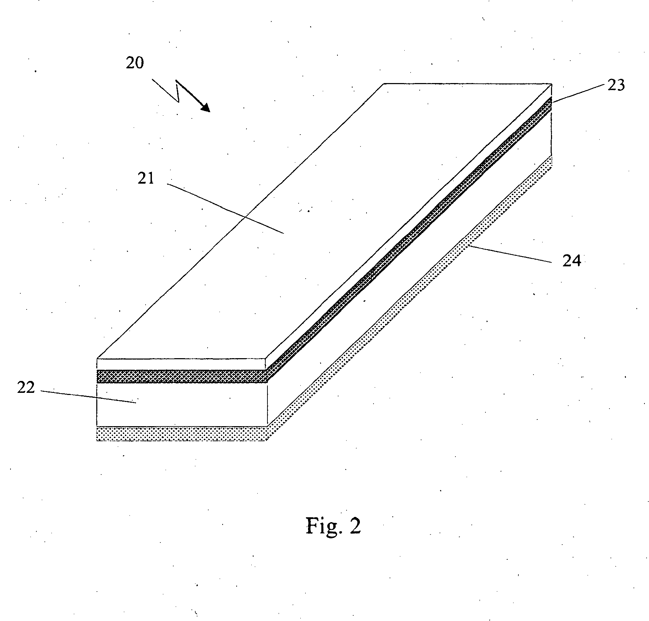

In Figur 2 ist eine erfindungsgemäße Belagplatte 20 schematisch dargestellt. Die Größen- und Dickenverhältnisse der verschiedenen Schichten sind dabei nicht unbedingt maßstabsgerecht, wie aus den unten angegebenen Größenverhältnissen klar werden wird. Wie aus Figur 2 zu erkennen ist, umfasst die Belagplatte 20 eine Dekorschicht 21 und eine Trägerplatte 22. In dem abgebildeten Ausführungsbeispiel besteht die Dekorschicht 21 aus einer Echtholzschicht, die vorzugsweise eine Dicke von 1 bis 6 mm hat. Die Trägerplatte 22 besteht vorzugsweise aus einer OSB-Platte, die beispielweise eine Dicke von 8 bis 20 mm haben kann. Zum Schutz der Trägerplatte 22 vor Feuchtigkeit ist die Trägerplatte 22 an ihrer Unterseite mit einer Barriereschicht 24 aus einem Material versehen, das die Trägerplatte vor eindringender Feuchtigkeit schützt. Die Barriereschicht 24 kann beispielsweise aus einem Phenolharz bestehen, das auf die Unterseite im flüssigen Zustand aufgetragen und anschließend ausgetrocknet bzw. ausgehärtet wurde. In einer besonders bevorzugten Ausführungsform besteht die Barriereschicht 24 aus einem mit Phenolharz getränkten Kraftpapier, das auf die Unterseite der Trägerplatte 22 aufgebracht, vorzugsweise aufgepresst wird. Durch Einwirkung von Druck und/oder Hitze findet dann vorzugsweise eine Polykondensation des Phenolharzes statt.

Zwischen der Dekorschicht 21 und der Trägerplatte 22 befindet sich eine weitere, so genannte Entkopplungsschicht 23. Die Entkopplungsschicht 23 besteht vorzugsweise aus einem anderen Material als die Barriereschicht 24 und besonders bevorzugt aus einem verleimungsfähigen Harzfilm. Auch in diesem Fall kann die Entkopplungsschicht aus einem mit einem verleimungsfähigen Harzfilm getränkten Kraftpapier bestehen, das auf die Oberseite der Trägerplatte 22 aufgebracht, vorzugsweise aufgepresst wird. Ebenso wie die Barriereschicht kann auch der Harzfilm der Entkopplungsschicht in flüssigem Zustand auf die Oberseite der Trägerplatte 22 aufgetragen und anschließend ausgetrocknet werden. Auf die ausgetrocknete Entkopplungsschicht 23 ist die Dekorschicht 21 mittels eines Leims oder Heißklebers befestigt. Die Entkopplungsschicht 23 verhindert vorzugsweise auch einen Feuchtigkeitsaustausch zwischen der Dekorschicht 21 und der Trägerplatte 22. Die Entkopplungsschicht 23 verhindert einen Verzug der Belagplatte 20, wenn sich Dekorschicht 21 und Trägerplatte 22 aufgrund der Einwirkung von z.B. Wärme und/oder Feuchtigkeit unterschiedlich ausdehnen. Die Entkopplungsschicht 23 "entkoppelt" die Dekorschicht 21 also von der Trägerplatte 22, so dass auf die Holzstäbchen 11 aus dem Stand der Technik verzichtet werden kann. Auf diese Weise kann eine Belagplatte 20 geschaffen werden, die eine Echtholzschicht hat, aber bei der ein kostengünstigeres Material für die Trägerplatte 22 gewählt werden kann. Insbesondere kann eine Trägerplatte aus OSB-Werkstoff verwendet werden, die neben anderen den Vorteil aufweist, dass ihre Längsseiten bzw. Querseiten einfach mit mechanischen Kopplungsmitteln versehen werden kann.

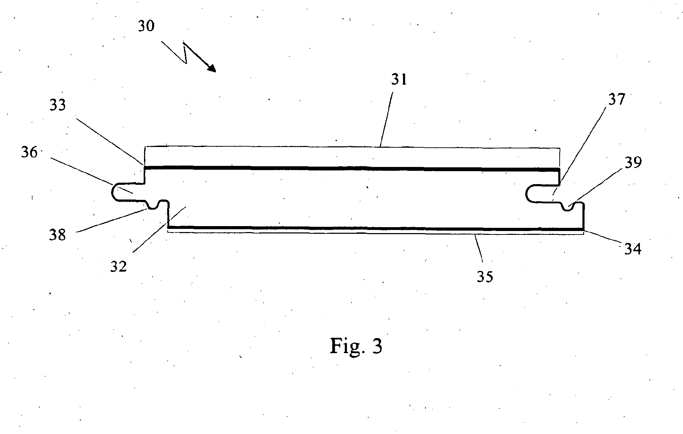

In Figur 3 ist eine weitere Ausbildungsform einer erfindungsgemäßen Belagplatte 30 im Schnitt gezeigt. Die Belagplatte 30 umfasst eine Dekorschicht 31 aus einem Furnier, wie z. B. aus einer dünnen Lage eines Edelholzes. Weiter umfasst die Belagplatte eine Trägerplatte 32, die vorzugsweise aus OSB-Werkstoff hergestellt ist. Zwischen Trägerplatte 32 und Dekorschicht 31 ist eine Entkopplungsschicht 33 angeordnet, die verhindert, dass sich bei einer unterschiedlichen Ausdehnung von Dekorschicht und Trägerplatte die Belagplatte 30 verzieht. Auch hier sollte es klar sein, dass ein leichter Verzug der Belagplatte 30 durchaus tolerierbar sein kann, so lange zumindest die Belagplatte 30 weiterhin als Element eines Fußboden-, Decken- oder Wandbelags dienen kann. An der Unterseite der Trägerplatte 32 ist eine Barriereschicht 34 gegen das Eindringen von Feuchtigkeit angeordnet. Unterhalb der Barriereschicht 34 ist eine Schallabsorptionsschicht 35 befestigt. Die Schallabsorptionsschicht 35 ist vorzugsweise fest mit der Barriereschicht 34 verleimt.

Wie aus Figur 3 gut zu erkennen ist, sind die zwei Längsseiten der Belagplatte 30 mit Kopplungsmitteln in der Form von Feder 36 und Nut 37 ausgerüstet. Feder und Nut sind aus dem Material der Trägerplatte 32 herausgefräst worden und bilden somit einen integralen Bestandteil der Trägerplatte. Auf diese Weise kann auf die Verwendung von separaten Kopplungsmitteln verzichtet werden, was die Handhabung und den Zusammenbau zum Beispiel eines Fußbodenbelags aus derartigen Belagplatten 30 erheblich vereinfacht. Feder 36 und Nut 37 sind komplementär zueinander ausgerichtet, so dass, wenn zum Beispiel zwei oder mehr Belagplatten 30 miteinander verbunden werden sollen, die Feder 36 einer ersten Belagplatte in die Nut 37 einer weiteren Belagplatte eingesetzt werden kann. Um die Verriegelung zweier derartig ausgebildeter Belagplatten miteinander zu verbessern, ist an der Unterseite der Feder 36 ein Verriegelungsvorsprung 38 vorgesehen, der sich nach unten erstreckt. Komplementär dazu befindet sich an der Oberseite der unteren Flanke der Nut 37 eine Verriegelungsvertiefung 39. Wenn zwei komplementär ausgebildete Belagplatten 30 miteinander verbunden werden, wird eine Feder 36 der einen Platte in eine Nut 37 der anderen Platte eingeführt und der Verriegelungsvorsprung 38 in die Vernegelungsvertiefung 39 bewegt. Dadurch werden die Belagplatten in einer Ebene parallel zu ihren Oberseiten mechanisch verriegelt. Die Kopplungsmittel verlaufen vorzugsweise über die gesamte Längsseite der Belagplatte. Selbstverständlich können alle sowohl Längsseiten als auch Querseiten der Belagplatte 30 mit derartigen oder ähnlichen Kopplungsmitteln versehen sein, so dass die Belagplatte 30 an allen vier Seiten mit komplementär ausgebildeten weiteren Belagplatten verbunden werden kann, um somit einen flächigen Belag für Fußböden, Decken oder Wände zu bilden.

Die hier offenbarten Belagplatten haben vorzugsweise Abmessungen, wie sie für Belagplatten für Fußböden üblich sind. Eine typische Belagplatte hat zum Beispiel eine Länge von 2400 mm, eine Breite von 200 mm, eine Gesamtdicke ohne Schallabsorption von 14 mm und davon eine Dekorschichtdicke von 3,6 mm (alles ca.-Werte). Die Schallabsorptionsschicht hat üblicherweise eine Dicke von 2 bis 4 mm abhängig von dem verwendeten Material. Die Barriereschicht und die Entkopplungsschicht können erheblich dünner sein als die Dekorschicht oder Trägerplatte und beispielsweise eine Dicke von weniger als 1 mm haben.

## Patentansprüche

1. Belagplatte (20; 30), insbesondere für einen Fußboden-, Decken oder Wandbelag, umfassend:
- eine Trägerplatte (22; 32) aus einem Holzwerkstoff mit einer Ober-und einer Unterseite, und
- eine Dekorschicht (21; 31), die an der Oberseite angeordnet ist, und eine Furnierschicht aus Echtholz ist,
- **dadurch gekennzeichnet, dass**
- auf die Unterseite eine Barriereschicht (24; 34) aus einem ersten Material aufgebracht ist, die die Trägerplatte vor Feuchtigkeit schützt, und
- wobei auf der Oberseite eine Entkopplungsschicht (23; 33) aus einem zweiten Material aufgebracht ist, die die Dekorschicht (21; 31) von der Trägerplatte (22; 32) entkoppelt, wobei die Dekorschicht mittels eines Klebstoffes auf die Entkopplungsschicht aufgeklebt ist, so dass sich die Trägerplatte und die Dekörschicht unterschiedlich ausdehnen können.

2. Belagplatte nach Anspruch 1, **dadurch gekennzeichnet, dass** die Trägerplatte (22; 32) eine OSB-Platte ist.

3. Belagplatte nach Anspruch 1, dadurch gekenntzeichnet, dass die Furnierschicht (21; 31) eine Dicke von 1, bis 6 mm hat.

4. Belagplatte nach einem der vorhergehenden Absprüche, **dadurch gekennzeichnet, dass** das erste Material und das zweite Material unterschiedlich sind.

5. Belagplatte nach einem der vorhergehenden Ansprüche, **dadurch gekennzeichnet, dass** zwischen der Oberseite und der Entkopplungsschicht zusätzlich ein phenolharzgetränktes Papier vorgesehen ist.

6. Belagplatte nach einem der vorhergehenden Ansprüche, **dadurch gekennzeichnet, dass** das zweite Material ein verleimungsfähiger oder verklebungsfähiger Harzfilm ist.

7. Belagplatte nach einem der vorhergehenden Ansprüche, **dadurch gekennzeichnet, dass** das zweite Material auch einen Feuchtigkeitsaustäusch zweischen der Trägerplatte und der Dekorschicht verhindert.

8. Belagplätte nach einem der vorhergehenden Ansprüche, **dadurch gekennzeichnet, dass** die Barriereschicht (24; 34) aus einem mit Melaminharz getränkten Papier besteht.

9. Belagplatte nach einem der vorhergehenden Ansprüche, **dadurch gekennzeichnet, dass** die Entkopplungsschicht (23; 33) aus einem mit verleirnungsfähigen Harz getränkten Papier besteht.

10. Belägplatte nach einem der vorhergehenden Ansprüche, **dadurch gekennzeichnet, dass** die Trägerplatte (22; 32) mit Kopplungsmitteln versehen ist, um die Belagplatte (20; 30) mit weiteren komplementär ausgebildeten Belagplatten verbinden zu können.

11. Belagplatte nach einem der vorhergehenden Ansprüche, **dadurch gekennzeichnet, dass** die Trägerplatte (22; 32) an zumindest zwei gegenüberliegenden Längsseiten mit Kopplungsmitteln versehen ist, um die Belagplatte (20; 30) mit weiteren komplementär ausgebildeten Belagplatten verbinden zu könnten.

12. Belagplatte nach einem der Ansprüche 10 oder 11, **dadurch gekennzeichnet, dass** die Kopplungsmittel aus Nut- Feder-Elementen (36; 37) bestehen, die in die Längsseiten der Trägerplatte (22; 32) eingearbeitet sind.

13. Belagplatte nach einem der vorhergehenden Ansprüche, **dadurch gekennzeichnet, dass** unterhalb der Barriereschicht (24; 34) eine schallabsorbierende Schicht (35) angeordnet ist.

14. Belagplatte nach einem der vorhergehenden Ansprüche, **dadurch gekennzeichnet, dass** die Dekorschicht eine Furnierschicht aus Echtholz ist und die Trägerplatzte eine Platte aus OSB ist und wobei die Belagplatte eine Platte für einen Fußboden-, Wand oder Deckenbelag ist.

15. Verfahren zur Herstellung einer Belagplatte, insbesondere für einen Fußboden-, Decken oder Wandbelag, umfassend die folgenden Schritte:
- Bereitstellen einer Trägerplatte aus einem Holzwerkstoff mit einer Ober-und einer Unterseite, und
- Auftragen einer Barriereschicht aus einem ersten Material auf die Unterseite, um die Trägerplatte vor Feuchtigkeit zu schützen und
- Auftragen einer Entkopplungsschicht aus einem zweiten Material auf die Oberseite, und danach
- optional Aushärten bzw. Trocknen der Barriereschicht und/oder der Entkopplungsschicht; und danach
- Auftragen eines Klebstoffes und Aufkleben einer Dekorschicht auf die Entkopplungsschicht.

## Claims

1. A covering plate (20; 30), particularly for a floor, ceiling, or wall covering, comprising:
- a carrier plate (22; 32) of wooden composite having an upper side and a lower side, and
- a decor layer (21; 31), arranged at the upper side, and a veneer layer of real wood,
- **characterized in that**
- a barrier layer (24; 34) of a first material is applied to the lower side, protecting the carrier plate from moisture, and
- wherein a decoupling layer (23; 33) of a second material is applied to the upper side, decoupling the decor layer (21; 31) from the carrier plate (22; 32), wherein the decor layer is adhered onto the decoupling layer by means of an adhesive, such that the carrier plate and the decor layer may extend differently.

2. Covering plate according to claim 1, **characterized in that** the carrier plate (22; 32) is an OSB plate.

3. Covering plate according to claim 1, **characterized in that** the veneer layer (21; 31) having a thickness of 1 to 6 mm.

4. Covering plate of one of the preceding claims, **characterized in that** the first material and the second material are different.

5. Covering plate of one of the preceding claims, **characterized in that** a paper, impregnated by a phenolic resin, is further provided between the upper side and the decoupling layer

6. Covering plate of one of the preceding claims, **characterized in that** the second material is a resin film that is bondable or suitable for adhering.

7. Covering plate of one of the preceding claims, **characterized in that** the second material additionally prevents moisture exchange between the carrier plate and the decor layer.

8. Covering plate of one of the preceding claims, **characterized in that** the barrier layer (24; 34) consist of a paper, impregnated by a melamine resin.

9. Covering plate of one of the preceding claims, **characterized in that** the decoupling layer (23; 33) consists of a paper, impregnated by a bondable resin.

10. Covering plate of one of the preceding claims, **characterized in that** the carrier plate (22; 32) is provided with coupling means to couple the covering plate (20; 30) with further complementary formed covering plates.

11. Covering plate of one of the preceding claims, **characterized in that** the carrier plate (22; 32) is provided with coupling means on at least two opposing longitudinal sides to couple the covering plate (20; 30) with further complementary formed covering plates.

12. Covering plate of one of the claims 10 or 11, **characterized in that** the coupling means consists of tongue and groove elements (36; 37), applied to the longitudinal sides of the carrier plate (22; 32).

13. Covering plate of one of the preceding claims, **characterized in that** a soundabsorbing layer (35) is provided beneath the barrier layer (24; 34).

14. Covering plate of one of the preceding claims, **characterized in that** the decor layer is a veneer layer of real wood, and that the carrier plate is a plate of OSB, and wherein the carrier plate is plate suitable for floor, wall, or ceiling coverings.

15. A method for manufacturing a covering plate, particularly for a floor, ceiling, or wall covering, comprising the following steps:
- providing a carrier plate of a wooden composite having an upper side and a lower side; and
- applying a barrier layer of a first material onto the lower side to protect the carrier plate from moisture, and
- applying a decoupling layer of a second material onto the upper side; and thereafter
- optionally, curing or drying the barrier layer and/or the decoupling layer, and thereafter
- applying an adhesive and adhering a decor layer onto the decoupling layer.

## Revendications

1. Panneau de revêtement (20 ; 30), en particulier pour un revêtement de sol, de plafond ou de mur, comprenant :
- un panneau de support (22 ; 32) dans un matériau à base de bois, présentant une face supérieure et une face inférieure, et
- une couche décorative (21 ; 31) qui est disposée sur la face supérieure et est une couche de placage en bois véritable,
- **caractérisé en ce que**
- sur la face inférieure est appliquée une couche de barrière (24 ; 34) dans un premier matériau, laquelle protège le panneau de support contre l'humidité, et
- sur la face supérieure est appliquée une couche de découplage (23 ; 33) dans un deuxième matériau, laquelle découple la couche décorative (21 ; 31) du panneau de support (22 ; 32), la couche décorative étant collée sur la couche de découplage au moyen d'un adhésif, de sorte que le panneau de support et la couche décorative peuvent se dilater différemment.

2. Panneau de revêtement selon la revendication 1, **caractérisé en ce que** le panneau de support (22 ; 32) est un panneau OSB.

3. Panneau de revêtement selon la revendication 1, **caractérisé en ce que** la couche de placage (21 ; 31) a une épaisseur de 1 à 6 mm.

4. Panneau de revêtement selon l'une des revendications précédentes, **caractérisé en ce que** le premier matériau et le deuxième matériau sont différents.

5. Panneau de revêtement selon l'une des revendications précédentes, **caractérisé en ce qu'**un papier imprégné de résine phénolique est prévu en plus entre la face supérieure et la couche de découplage.

6. Panneau de revêtement selon l'une des revendications précédentes, **caractérisé en ce que** le deuxième matériau est un film de résine apte à l'assemblage par adhésif ou apte au collage.

7. Panneau de revêtement selon l'une des revendications précédentes, **caractérisé en ce que** le deuxième matériau empêche également un échange d'humidité entre le panneau de support et la couche décorative.

8. Panneau de revêtement selon l'une des revendications précédentes, **caractérisé en ce que** la couche de barrière (24 ; 34) est constituée d'un papier imprégné de résine de mélamine.

9. Panneau de revêtement selon l'une des revendications précédentes, **caractérisé en ce que** la couche de découplage (23 ; 33) est constituée d'un papier imprégné de résine apte à l'assemblage par adhésif.

10. Panneau de revêtement selon l'une des revendications précédentes, **caractérisé en ce que** le panneau de support (22 ; 32) est pourvu de moyens de couplage pour pouvoir relier le panneau de revêtement (20 ; 30) à d'autres panneaux de revêtement de forme complémentaire.

11. Panneau de revêtement selon l'une des revendications précédentes, **caractérisé en ce que** le panneau de support (22 ; 32) est pourvu de moyens de couplage sur au moins deux grands côtés opposés pour pouvoir relier le panneau de revêtement (20 ; 30) à d'autres panneaux de revêtement de forme complémentaire.

12. Panneau de revêtement selon l'une des revendications 10 ou 11, **caractérisé en ce que** les moyens de couplage sont constitués d'éléments à rainure et languette (36 ; 37) qui sont ménagés dans les grands côtés du panneau de support (22 ; 32).

13. Panneau de revêtement selon l'une des revendications précédentes, **caractérisé en ce qu'**une couche à absorption acoustique (35) est disposée sous la couche de barrière (24 ; 34).

14. Panneau de revêtement selon l'une des revendications précédentes, **caractérisé en ce que** la couche décorative est une couche de placage en bois véritable et le panneau de support est un panneau OSB, le panneau de revêtement étant un panneau pour un revêtement de sol, de mur ou de plafond.

15. Procédé de fabrication d'un panneau de revêtement, en particulier pour un revêtement de sol, de plafond ou de mur, comprenant les étapes suivantes :
- mise à disposition d'un panneau de support dans un matériau à base de bois présentant une face supérieure et une face inférieure, et
- application d'une couche de barrière dans un premier matériau sur la face inférieure pour protéger le panneau de support contre l'humidité et
- application d'une couche de découplage dans un deuxième matériau sur la face supérieure, puis
- en option, durcissement ou séchage de la couche de barrière et/ou de la couche de découplage ; puis
- application d'un adhésif et collage d'une couche décorative sur la couche de découplage.
